**Europäisches Patentamt**

**European Patent Office**

**Office européen des brevets**

(19)

(11) Veröffentlichungsnummer: **0 106 198**
**B1**

# (12) EUROPÄISCHE PATENTSCHRIFT

(45) Veröffentlichungstag der Patentschrift:
13.05.87

(21) Anmeldenummer: 83109334.9

(22) Anmeldetag: 20.09.83

(51) Int. Cl.⁴: **H 04 Q 3/52**, H 04 Q 3/68

(54) Schaltungsanordnung für eine Fernsprechanlage, insbesondere Fernsprechnebenstellenanlage, mit Sprech- und Signalwegedurchschaltung über seriell geschaltete Koppler.

(30) Priorität: 24.09.82 DE 3235463

(43) Veröffentlichungstag der Anmeldung:
25.04.84 Patentblatt 84/17

(45) Bekanntmachung des Hinweises auf die Patenterteilung:
13.05.87 Patentblatt 87/20

(84) Benannte Vertragsstaaten:
AT BE CH DE GB IT LI SE

(56) Entgegenhaltungen:
US - A - 3 952 165

ERICSSON REVIEW, Band 58, Nr. 1, 1981, Seiten 30-37, Stockholm, SE, L. NYBERG: "Stored program controlled PABX, ASB 20"
MICROELECTRONICS AND RELIABILITY, Band 18, Nr. 1/2, 1978, Seiten 15-33, Pergamon Press, Oxford, GB, B. MARCLAY: "A PABX model using the 6800 MPU"
IBM JOURNAL OF RESEARCH AND DEVELOPMENT, Band 13, Nr. 4, Juli 1969, Seiten 416-427, New York, US, R.E. REYNIER: "Electronic switching network of the IBM 2750"

(73) Patentinhaber: **Siemens Aktiengesellschaft Berlin und München, Wittelsbacherplatz 2, D-8000 München 2 (DE)**

(72) Erfinder: **Helsmoortel, Luc, Zandstrasse 19, B-8401 Bredene (BE)**

## Beschreibung

Die Erfindung bezieht sich auf eine Schaltungsanordnung für eine Fernsprechanlage, insbesondere Fernsprechnebenstellenanlage mit einer zentralen, die Zustände der Endstellen abtastenden Steuerung, mit den Endstellen zugeordneten, zumindest eine Speisung der Endstellen enthaltenden Teilnehmerschaltungen, sowie mit über entsprechende Sätze anschaltbaren, unterschiedlichen Verbindungsleitungen und unterschiedlichen Sondereinrichtungen, wobei die Betätigung von teilnehmerindividuellen Sprechwegekoppelpunkten und von für die Durchschaltung von teilnehmerindividuell anzulegenden Signalen, wie z.B. Tonsignalen, vorgesehenen Koppelpunke jeweils vermittels eines Kopplers einer ersten Art erfolgt, bei dem – erzogen auf jeweils eine bestimmte Koordinate – die Koppelpunkte unabhängig vom Betätigungszustand der jeweils zugehörigen anderen Koppelpunkte in Abhängigkeit von den Verbindungszuständen und von den Befehlen der zentralen Steuerung betätigbar sind.

Aus der Zeitschrift «Bulletin Technik PTT», Nr. 3, Seiten 115 bis 130, ist bereits eine Fernsprechnebenstellenanlage bekannt, bei der die Teilnehmerstellen zu Gruppen zusammengefasst und dem Gruppenkoppler zugeordnet sind, wobei die Sprechstellen jeweils an den Zeilen angeschaltet sind und über die jeweiligen Spalten unterschiedliche Wähler für unterschiedliche Verbindungen belegt werden, und zwar Wähler für den Internverkehr, über die Internverbindungssätze ausschaltbar sind und Wähler, über die Amtsübertragungen anschaltbar sind. An den Amtsübertragungen sind über gesonderte Eingänge Vermittlungsplätze über einen getrennten Wähler ankoppelbar. Alle vorgesehenen Wähler sind Kreuzschienenwähler.

In den Hasler-Mitteilungen, Nr. 3/1957, Seiten 57 bis 67, ist eine Fernsprechnebenstellenanlage beschrieben, bei denen die Sprechstellen mit den Zeilen und über die Spalten die Eingänge bzw. Ausgänge zu Internverbindungssätzen, die Eingänge zu Amtsübertragung und Rückfragesätze sowie zu Hilfsverbindungsstromkreisen belegbar sind. Es handelt sich hier um die sog. Einkopplertechnik, bei der die Verbindungen durch Betätigung eines bzw. zweier Koppelpunkte im Koppelfeld durchschaltbar sind. Die Koppelpunkte sind unabhängig voneinander steuerbar. Als Koppler sind Kreuzschienenwähler verwendet.

Durch die US-PS 4 105 875 ist eine Fernsprechnebenstellenanlage bekannt, bei der alle Teilnehmer, Verbindungssätze, Vermittlungsplätze, Codeempfänger und Sondersätze an den Zeilen eines Kopplers angeschaltet sind und eine Verbindung zwischen den genannten Einrichtungen jeweils durch Betätigung zweier Koppelpunkte des Kopplers herstellbar ist. Für die Anschaltung von Signalen ist ein weiterer gleichartiger Koppler vorgesehen, über den unter Einbeziehung des Sprechwegekopplers diese Signale in Form von Hörzeichen zugeführt werden. Die Koppelpunkte der Koppler sind – bezogen auf eine bestimmte Koordinate – unabhängig vom Betätigungszustand der jeweils zugehörigen anderen Koppelpunkte durchschaltbar.

Die Aufgabe der vorliegenden Erfindung soll bei einer Fernsprechanlage, insbesondere Fernsprechnebenstellenanlage der eingangs genannten Art darin bestehen, die Sprechwegedurchschaltung bei der Verbindungsherstellung zwischen Teilnehmerstellen untereinander und zwischen Teilnehmerstellen und -sätzen, welche unterschiedlichen Verbindungsleitungen zugeordnet sind, sowie mit anderen für.die Verbindungsherstellung notwendigen Einrichtungen und Sondereinrichtungen derart einfach zu gestalten, dass durch Hinzufügung der einzelnen Kopplereinheiten ein jeweils kundengerechter Systemausbau problemlos möglich ist.

Dies wird dadurch erreicht, dass durch die Betätigung von Koppelpunkten zusätzlicher Koppler der genannten ersten Art weiterhin sowohl die teilnehmerindividuelle Anschaltung von in bestimmten Verbindungszuständen und/oder bei verschiedenen Verbindungsarten anzulegenden unterschiedlichen Signale als auch die teilnehmerindividuelle Zuschaltung von Verbindungssätzen erfolgt und hierzu ein- und dieselbe Verbindung auch über mehr als einen Koppelpunkt einer Koordinate eines Kopplers oder mehrere seriell geschalteter Koppler steuerbar ist und dass eine Betätigung von satzindividuellen, den teilnehmerindividuellen Sprechwegekoppelpunkten je nach Verkehrsrichtung nach bzw. vorgeordneten Sprechwegekoppelpunkten eines Kopplers zweiter Art zwecks Anschaltung unterschiedlicher Verbindungsleitungen bzw. unterschiedlicher Sondereinrichtungen erfolgt, wobei für diese Verbindungsdurchschaltung in den Kopplern der zweiten Art je Verbindung jeweils nur ein einziger Koppelpunkt einer Koordinate betätigt wird.

Durch die Verwendung unterschiedlicher Kopplerarten wird je nach Einsatz des Kopplers die Steuerung vereinfacht. Ausserdem ist es durch die Nach- bzw. Vorordnung von Sprechwegekoppelkontakten unterschiedlicher Koppler in den zu den teilnehmerindividuellen Sprechwegekoppelpunkten führenden Zwischenleitungen möglich, den Ausbau einer Anlage in einfachster Weise ohne Änderung des Grundkonzeptes vorzunehmen.

Gemäss einer weiteren Ausbildung der Erfindung sind die Endstellen jeweils zu Gruppen mit jeweils einem der Gruppe zugeordneten Koppler erster Art zusammengefasst und werden die Endstellen ein und derselben Gruppe über zwei einer Zeile zugeordneten Sprechwegekoppelpunkte und die Endstellen unterschiedlicher Gruppen über je einen Koppelpunkt der jeweils zugeordneten beiden Koppler und über zwischen diesen beiden Kopplern verlaufende Zwischenleitungen miteinander verbunden und sind parallel zu diesen Zwischenleitungen, die zu den unterschiedlichen Verbindungsleitungen durchschaltenden Koppler zweiter Art führenden Zwischenleitungen geschaltet.

Hiermit ist die Erweiterbarkeit um zusätzliche Verbindungsleitungen und zusätzliche Koppler für die Anschaltung der Verbindungsleitungen in einfacher Weise möglich.

Gemäss einer weiteren Ausbildung der Erfindung sind die Zwischenleitungen für die Sprechwegedurchschaltung einadrig über elektronische Koppelpunkte geführt.

Gemäss einer weiteren Ausbildung der Erfindung sind die Zwischenleitungen für den internen Sprechverkehr und die Zwischenleitungen für den Sprechverkehr über Verbindungsleitungen unterschiedlicher Art über für die Anschaltung von Signalen vorgesehenen Koppler erster Art geführt.

Auf diese Weise ist durch die Einfügung solcher Koppler die einfache Anschaltung von Tonsignalen über in den Zwischenleitungen eingefügten Kopplern möglich.

Gemäss einer weiteren Ausbildung der Erfindung sind die Zwischenleitungen für den internen Sprechverkehr und die Zwischenleitungen für den Sprechverkehr über Verbindungsleitungen unterschiedlicher Art über für die Anschaltung von Vermittlungsplätzen dienenden Leitungen führenden Koppler erster Art geführt.

Auf diese Weise kann auch durch die Einfügung entsprechender Koppler in den Zwischenleitungen, die zu den Verbindungsleitungen führen, eine Anschaltung von Vermittlungsplätzen vorgesehen werden.

Gemäss einer weiteren Ausbildung der Erfindung sind die Zwischenleitungen für internen Sprechverkehr über zu Konferenzsätzen führenden Koppler erster Art geführt.

Hierdurch ist in einfacher Weise durch Einfügung eines Konferenzkopplers in den Zwischenleitungen, die für den internen Sprechverkehr dienen, den Teilnehmerstellen eine Konferenzmöglichkeit gegeben.

Gemäss einer weiteren Ausbildung der Erfindung sind die Zwischenleitungen für internen Sprechverkehr und die Zwischenleitungen für Sprechverkehr über Verbindungsleitungen unterschiedlicher Art über Codeempfänger anschaltende Koppler zweiter Art geführt.

Auf diese Weise kann in den Zwischenleitungen für den internen Verkehr und für den externen Verkehr in einfacher Weise ein Koppler für die Anschaltung von Codeempfängern vorgesehen werden.

Gemäss einer weiteren Ausbildung der Erfindung sind die Zwischenleitungen für internen Sprechverkehr über Personensucheinrichtungen anschaltende Koppler geführt.

Hierdurch kann auch in einfacher Weise in den Zwischenleitungen für den Internverkehr ein Koppler für Sondereinrichtungen, beispielsweise Personensucheinrichtungen, vorgesehen werden.

Gemäss einer weiteren Ausbildung der Erfindung sind die Zwischenleitungen für internen Sprechverkehr und die Zwischenleitungen für Sprechverkehr über Verbindungsleitungen unterschiedlicher Art über die Anschaltung von Durchschalteprüfungen veranlassende Koppler erster Art geführt.

Hierdurch kann durch Einfügen zusätzlicher Koppelpunkte in für den Intern- und Externverkehr vorgesehenen Zwischenleitungen die Anschaltung von Prüfeinrichtungen und Prüfpotentialen erfolgen.

Gemäss einer weiteren Ausbildung der Erfindung sind die Zwischenleitungen für Sprechverkehr über Verbindungsleitungen unterschiedlicher Art über entsprechende Koppler zweiter Art die Durchschaltung zu den Verbindungsleitungen ermöglichen und an den den Verbindungsleitungen zugeordneten Zeilen über weitere Koppler Tonsignale anschaltbar.

Auf diese Weise können besondere Tonsignale zu den Verbindungsleitungen durchgeschaltet werden.

Gemäss einer weiteren Ausbildung der Erfindung ist über den letztgenannten Koppler die Zuschaltung zur Konferenz möglich.

Auf diese Weise kann auch der Amtsteilnehmer zu einer Internkonferenz in einfacher Weise hinzugeschaltet werden.

Gemäss einer weiteren Ausbildung der Erfindung sind die internen Endstellen über einen Koppler erster Art und die Verbindungsleitungen über einen Koppler zweiter Art und eine entsprechende Konferenzschaltung zusammenschaltbar.

Auf diese Weise können Intern- und Externteilnehmer über einen zusätzlichen in den Zwischenleitungen für Internverkehr vorgesehenen Koppler und über besondere Anschlüsse einer Konferenzschaltung zu einer Konferenz in einfacher Weise zusammengeschaltet werden.

Gemäss einer weiteren Ausbildung der Erfindung ist ein Codeempfänger über einen Koppler zweiter Art mit den internen Endstellen und über einen entsprechenden Koppler erster Art zur Anschaltung von Tonsignalen mit einem weiteren Koppler erster Art, der zur Bestimmung des Tonrhythmus dient, verbindbar.

Auf diese Weise kann der Koppler, der für die Anschaltung der Codeempfänger in den Zwischenleitungen für die Internverbindung bzw. für die Externverbindungen eingefügt ist, auch für die Anschaltung der Tonsignale mit ausgenutzt werden. Diese Tonsignale können in einfacher Weise über einen weiteren Koppler im geeigneten Rhythmus angeschaltet werden.

Gemäss einer weiteren Ausbildung der Erfindung sind jeweils ein Koppler für die Anschaltung der Signale, ein Koppler für die Anschaltung der Vermittlungsplätze und ein Koppler für die Anschaltung der Durchschalteprüfkriterien erster Art zu einem Koppler für die Anschaltung an den internen Sprechweg bzw. zu einem Koppler für die Anschaltung an den Verbindungsleitungen unterschiedlicher Art zusammengefasst.

Auf diese Weise können vorgegebene, elektronische Koppler bestimmter Grösse verwendet werden, die durch die Zuteilung der unterschiedlichen Funktionen dann voll ausnutzbar sind.

Gemäss einer weiteren Ausbildung der Erfindung erfolgt eine Anlagenerweiterung dadurch, dass zusätzliche Koppler zweiter Art für die Anschaltung von Verbindungsleitungen unterschiedlicher Art und zusätzliche Koppler erster Art für die Anschaltung von Signalen parallel an den Zeilen der Koppler erster Art der Endstellengruppen anschaltbar sind.

Gemäss einer weiteren Ausbildung der Erfindung sind die Vermittlungsplätze über Zwischenleitungen mit dem Koppler erster Art für die Anschaltung an den zu den Endstellen bzw. Verbindungsleitungen unterschiedlicher Art führenden Koppler verbunden, welche über den Koppler erster Art für die Bestimmung des Tonrhythmus geführt sind.

Auf diese Weise ist nicht nur in einfacher Weise die Anschaltung von unterschiedlichen Tonsignalen zu den Vermittlungsplätzen, sondern gleichzeitig über die gleichen Zwischenleitungen die Durchschaltung zu den Endstellen bzw. zu den den Verbindungsleitungen zugeordneten Sätzen möglich.

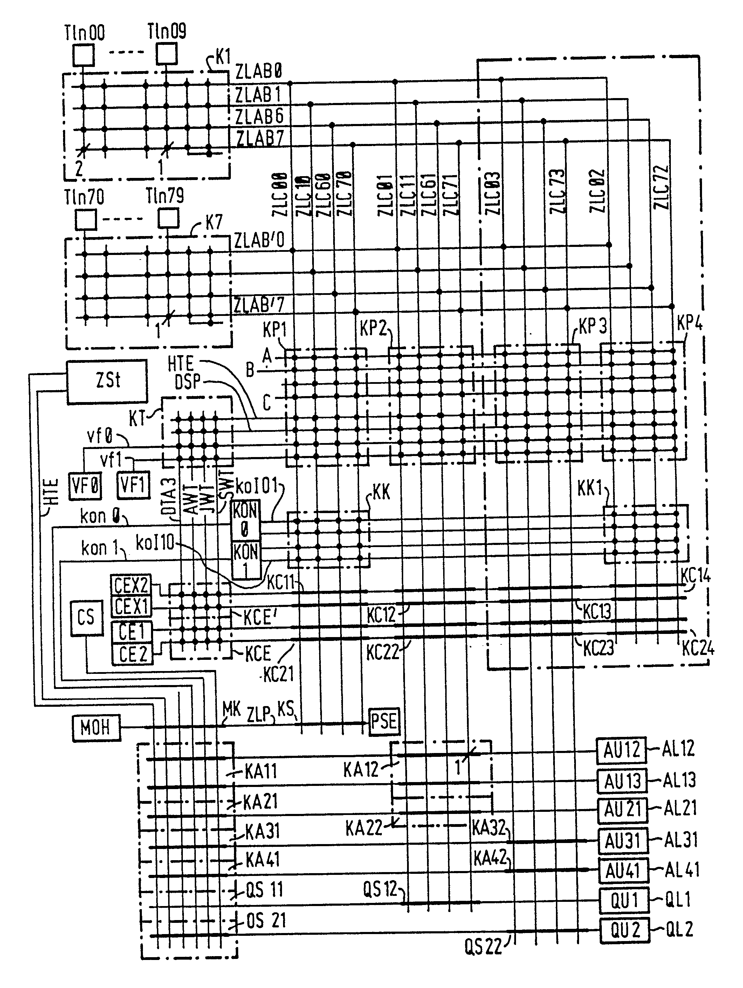

Anhand der Zeichnung ist ein Ausführungsbeispiel der Erfindung beschrieben. Es sind nur die für das Verständnis wichtigen Einzelheiten dargestellt. Bei der beschriebenen Fernsprechnebenstellenanlage handelt es sich um eine zentralgesteuerte Anlage, bei der einer zentralen Steuereinrichtung ZST eine nicht dargestellte Wegesucheinrichtung und Schaltmittel zur Durchsteuerung der durchzuschaltenden Koppelpunkte zugeordnet sind, die in bekannter Weise arbeiten. Die im System vorhandenen Koppler schalten die Sprechwege einadrig durch. Die Koppelpunkte selbst sind sogenannte elektronische Koppelpunkte, z.B. CMOS-Bausteine.

Im nachfolgenden wird im einzelnen auf die Koppelfeldstruktur für die Sprechwegedurchschaltung, sowie auf die Koppelfeldstruktur für die Anschaltung von Codeempfängern, Konferenzeinrichtungen, Personensucheinrichtungen, Hörtönen unterschiedlicher Art und Vermittlungseinrichtungen eingegangen. Im Ausführungsbeispiel sind als Endstellen Teilnehmerstellen vorgesehen. Als Endstellen können aber auch Dateneinrichtungen, Videogeräte und dergleichen vorgesehen werden. Es sind als Beispiel zwei Teilnehmergruppen Tln00 bis Tln09 und Tln70 bis Tln79 mit den jeweiligen Gruppen zugeordneten Kopplern K1 und K7 dargestellt. Teilnehmer derselben Gruppe werden durch Betätigungen zweier Koppelpunkte in dem der Gruppe zugeordneten Koppler, beispielsweise K1, miteinander verbunden. Dies sind beispielsweise für die Teilnehmerstellen Tln00 und Tln09 beispielsweise die Koppelpunkte K1/1 und K1/2. Die Durchschaltung der Koppelpunkte erfolgt wie bereits erwähnt unter Zuhilfenahme der zentralen Steuereinrichtung und der der zentralen Steuereinrichtung zugeordneten Wegesucheinrichtung. Sprechstellen unterschiedlicher Gruppen werden durch Betätigen eines Koppelpunktes des Kopplers der einen Gruppe und eines Koppelpunkts des Kopplers der anderen Gruppe für eine Sprechverbindung miteinander verbunden. So wird beispielsweise die Teilnehmerstelle Tln09 über den Koppelpunkt K1/1 und die Zwischenleitungen ZLC70 und den Koppelpunkt K7/1 des Kopplers K7 mit der Teilnehmerstelle Tln79 verbunden. Eine Verbindung der Teilnehmerstelle Tln09 mit einer Amtsübertragung, z.B. AU12 für die Herstellung einer Verbindung über die Amtsleitung AL12, erfolgt beispielsweise durch Betätigen des Koppelpunktes K1/1 des Kopplers K1 und des Koppelpunktes KA12/1 im Koppler KA12. Die Verbindung verläuft dann über die Zwischenleitung ZLC71. Die Koppelpunkte der Koppler für die zur Herstellung von Internverbindungen, d.h. die Koppelpunkte der Koppler K1 und K7 sind unabhängig voneinander betätigbare Koppelpunkte. Dies bedeutet, dass beliebige Koppelpunkte in der Zeile bzw. in der Spalte betätigbar sind und auf diese Weise innerhalb eines Kopplers beliebige Eingänge und Ausgänge des Kopplers miteinander verbindbar sind. Beim Amtskoppler ist dagegen jedem Ausgang fest eine Amtsübertragung zugeordnet, welche über einen der Eingänge, d.h. über eine der Zwischenleitungen für abgehende Verbindungen und umgekehrt für ankommende Verbindungen belegbar sind.

Für eine Verbindungsherstellung innerhalb der Nebenstellenanlage und auch für die Weiterübertragung von Wahlkennzeichen zum öffentlichen Amt ist die Anschaltung eines Codeempfängers CE1, CE2, CEX1, CEX2 an die zur anrufenden Teilnehmerstelle führende Leitung erforderlich. Auch ist die Anschaltung von Wahlkennzeichen zur anrufenden bzw. angerufenen Teilnehmerstelle notwendig. Zu diesem Zwecke sind entsprechende Koppler in den Zwischenleitungen, die zu den Endstellen (Teilnehmerstellen) und Verbindungsleitungsübertragungen, Amtsübertragungen und Querverbindungsleitungsübertragungen führen, eingefügt. Der Codeempfänger CE2 wird beispielsweise über den Koppler KC21 mit einer der Endstellen und über den Koppler KC22 mit einer der Amtsübertragungen AU12 bis AU41 verbunden. Die Anschaltung des Codeempfängers CE erfolgt beispielsweise nach Abheben des Hörers an einer Teilnehmerstelle in Abhängigkeit von entsprechenden Steuerbefehlen der zentralen Steuerung ZST. Wählt eine Teilnehmerstelle eine Amtskennziffer, so erfolgt die Durchschaltung der Teilnehmerstelle durch Betätigen eines entsprechenden Koppelpunktes des der Teilnehmerstelle zugeordneten Kopplers, beispielsweise K1, zur Amtsübertragung, beispielsweise über den Koppler KA12 zur Amtsübertragung AU12 und wird für die Aufnahme der über die Amtsübertragung AU12 zu sendenden Wahlkennzeichen der Codeempfänger, beispielsweise CE1, anstelle über den Koppler KC21 jetzt über den Koppler KC22 an die entsprechende für die Belegung der Amtsübertragung AU12 belegte Zwischenleitung, beispielsweise ZLC71, angeschaltet. Der Koppler KA22 für die Anschaltung der Codeempfänger CE1, CE2, CEX1, CEX2 ist, wie der Koppler KA12 für die Anschaltung der Amtsübertragungen AU12 bis AU47, ein Koppler, von dem nur ein Koppelpunkt einer Zeile gleichzeitig durchschaltbar ist.

Die Anschaltung der Signale, d.h. der Hörtöne erfolgt teilweise über einen der Koppler KP1 bis KP4 und teilweise über den Koppler KCE, der in die Zwischenleitungen eingefügt ist, über die die Codeempfänger CE1, CE2, CEX1, CEX2 angeschaltet werden. Über den Koppler KCE werden die Töne angeschaltet, die in Zusammenhang stehen mit der Wahl, also während der Anschaltezeit der Codeempfänger CE1, CE2, CEX1, CEX2. So wird beispielsweise über die Leitung SWT ein Sonderwählton, über die Leitung IWT der interne Wählton, über die Leitung AWT der Amtswählton und über die Leitung DTA3 ein Dauerton angeschaltet. Der Rhythmus der Töne wird durch Öffnen und Schliessen der Koppelpunkte des Kopplers KT im entsprechenden Rhythmus bestimmt. Das Öffnen und Schliessen der Koppelpunkte des Kopplers KT für die genannten drei Wähltonarten wird von der zentralen Steuerung ZST veranlasst. Der Koppler KCE für die Anschaltung der Wähltöne vereinfacht das Anschalteverfahren und reduziert die Anzahl notwendiger Koppelpunkte in den Kopplern KP1 bis KP4. Über die Koppler KP1 bis KP4 werden andere Töne, beispielsweise der Besetztton, über die Ader B, der Aufschalteton über die Ader A usw. angeschaltet. Über die Zwischenleitung DSP werden Potentiale für die Durchschalteprüfung der Koppelpunkte angeschaltet. Diese Durchschalteprüfung wird vor jedem Durchschalten der den Teilnehmerstellen zugeordneten Koppelpunkte bzw. der den Verbindungsleitungsübertragungen zugeordneten Koppelpunkten vorgenommen, um sicherzustellen, dass eine Durchschaltung über den Koppelpunkt dann nicht erfolgt, wenn der elektronische Koppelpunkt fehlerhaft ist. Die Durchschalteprüfung wird von der zentralen Steuerung ZST veranlasst. Über die Anschlüsse HTE ist ein Hörzeichen anschaltbar, um eine Prüfung der angeschalteten Endstelle bzw. der angeschalteten Übertragung beispielsweise durch Spiegelung vorzunehmen. Über die Zwischenleitungen vf0 und vf1 der Koppler KP1 bis KP4 sind Vermittlungsstationen VF1 bzw. VF0 mit den entsprechenden Steuerungen anschaltbar. Diesen Vermittlungsplätzen können über den Koppler KT unmittelbar Wähltone zugeführt werden.

Der Codesender CS überträgt über die entsprechenden Koppler KA11 bis QS'21 Mehrfrequenzcodezeichen als Wahlkennzeichen zu angeschalteten Verbindungsleitungen, d.h. Amtsleitungen AL12, AL13, AL21, AL31, AL41 bzw. Querverbindungsleitungen QL1, QL2 und zwar erfolgt diese Übertragung in Abhängigkeit von über die jeweilige Verbindungsleitung übertragenen Wahlbereitschaftskennzeichen, d.h. vom übertragenen Wählzeichen aus der Gegenanlage. Die Überwachung des Empfangs eines derartigen Hörzeichens als Wahlbereitschaftskennzeichen erfolgt über den Anschluss HTE durch die zentrale Steuerung ZST.

Über einen weiteren Koppler KS ist eine Personensucheinrichtung mit internen Teilnehmerstellen über entsprechende Koppelpunkte einer der Koppler K1 bis K7 anschaltbar. Im Ausführungsbeispiel ist nur eine Personensucheinrichtung dargestellt, es können aber selbstverständlich mehrere Personensucheinrichtungen über entsprechende zusätzliche Zeilen des Kopplers KS angeschaltet werden.

Eine zusätzliche Einrichtung MOH ist für die Anschaltung besonderer Hörzeichen, beispielsweise auch von Musik, vorgesehen und wird entweder über den Koppler MK und einen Koppelpunkt der den Verbindungsleitungen zugeordneten Koppler KA12...KA42 an einer der Verbindungsleitungen beispielsweise an eine Amtsleitung oder über den Koppler KS an zu den Teilnehmerstellen führende Zwischenleitungen angeschaltet. Diese Anschaltung beispielsweise von Musik erfolgt während des Wartens der internen Teilnehmerstelle bzw. der externen Teilnehmerstelle auf die Durchschaltung einer Verbindung durch den Vermittlungsplatz. In den Zwischenleitungen, die zu den Teilnehmerstellen führen und über die die Anschaltung der Hörzeichen und der Codeempfänger CE1, CE2, CEX1, CEX2 erfolgt, ist ferner ein zusätzlicher Koppler KK vorgesehen, über den die Anschaltung eines Konferenzsatzes KON0, KON1 erfolgt. Ein derartiger Konferenzsatz KON0, KON1 hat so viele Ausgänge kOl01...kOl10 zu diesem Koppler KK als gleichzeitig Internteilnehmerstellen für eine Konferenz zusammenschaltbar sind. Es ist zumindest ein weiterer Ausgang kon0, kon1 zu den Kopplern KA11 bis QS'21 vorgesehen, die zu den anschaltbaren Verbindungsleitungen AL12 bis QL2 führen. In der Regel ist nur eine Dreierkonferenz vorgesehen, so dass nur ein Ausgang eines Konferenzsatzes KON0, KON1 Zugang zu einer der Verbindungsleitungen hat. Durch Betätigen mehr als eines Koppelpunktes in einer Zeile des Kopplers KK ist an einem Ausgang des Konferenzsatzes KON0, KON1 auch mehr als eine Teilnehmerstelle anschaltbar.

Eine Erweiterung einer Anlage ist in einfacher Weise durch parallele Anschaltung von weiteren Kopplern KP3, KP4 und KC13 bis KC24 bzw. KK1 parallel zu den anderen vorhandenen Kopplern für die Anschaltung von Hörsignalen, Codeempfängern und Konferenzsätzen an zu den Teilnehmerstellen über den zugeordneten Koppelpunkten führenden Zwischenleitungen möglich.

Aus dem Vorstehenden geht hervor, dass die Teilnehmerstellen Tln00 bis Tln79 über die Spaltenleitungen der Koppler K1 bis K7 mit Zwischenleitungen ZLAB0 bis ZLAB'7 verbindbar sind, über die parallel zueinander geschaltete Zwischenleitungen erreichbar sind, die zu für Internverbindungen benötigten Einrichtungen bzw. zu für Externverbindungen benötigten Einrichtungen führen. Diese parallel zueinander geschalteten Zwischenleitungen sind auch zu Gruppen zusammengefasst, wobei die Anzahl der Gruppen abhängig ist von der Grösse der Anlage. Es können demnach je nach Anlagenart weitere Zwischenleitungsgruppen und damit weitere in den Zwischenleitungen geschalteten Koppler für zusätzlichen Verkehrsaufwand vorgesehen werden. Für die kleinste Ausbauart des Systems gibt eine Zwischenleitungsgruppe ZLC00 bis ZLC70 für Internverbindungen und eine Zwischenleitungsgruppe ZLC01 bis ZLC71 für Verbindungen über anschaltbare Verbindungsleitungen unterschiedlicher Art.

Über die Zwischenleitungsgruppe ZLC00 bis ZLC70, die an den Zwischenleitungen ZLAB0 bis ZLAB70 und auch an den Zwischenleitungen ZLAB'0 bis ZLAB'7 anschaltbar sind, sind seriell Koppler für die Anschaltung von Tönen, Koppler für die Anschaltung von Prüfsignalen und Prüftönen, Koppler für die Anschaltung von Vermittlungsplätzen, welche drei letztgenannten Koppler zu einem Koppler KP1 zusammenfassbar sind, sowie Koppler KK für die Anschaltung von Konferenzsätzen KON0 bis KN1 und Koppler für die Anschaltung von Codeempfängern und von über zusätzliche Koppler anschaltbare Wähltöne, KC11 bis KC21, und Koppler KS für die Anschaltung von Sondereinrichtungen, insbesondere Personensucheinrichtungen PSE anschaltbar.

In die Zwischenleitungen sind die Spalten dieser Koppler geschaltet. Die Zeilen der genannten Koppler sind entweder direkt mit den genannten Einrichtungen verbunden bzw. sind über weitere, zusätzliche Koppler direkt mit anderen Einrichtungen, beispielsweise Vermittlungsplätzen und Codeempfängern verbunden, wobei aber über die zusätzlichen Koppler zusätzliche Informationen, beispielsweise im Rhythmus schaltbare Töne bzw. andere Informationen, beispielsweise Musik während des Wartezustandes, anschaltbar sind.

Über die andere Zwischenleitungsgruppe ZLC01 bis ZLC71, die über die Spalten der den Teilnehmerstellen zugeordneten Koppler belegbar sind, sind seriell die zu einem Koppler KP2 zusammengefassten Koppelgruppen über die Töne, Prüfpotentiale bzw. Prüftöne übertragen werden und Vermittlungsplätze sowie Koppler KC12, KC22 für die Anschaltung von Codeempfängern bzw. von in bestimmtem Rhythmus angeschalteten Wähltönen und Koppler KA12 bis QS12 für die Anschaltung von Verbindungsleitungen AL12 ... QL2 unterschiedlicher Art erreichbar.

Bei der Erweiterung der vorgenannten Grundkonzeption um weitere Teilnehmerstellen bzw. um weitere Verbindungsleitungsübertragungen unterschiedlicher Art sind weitere Zwischenleitungsgruppen, beispielsweise ZLC03 bis ZLC73 und ZLC02 bis ZLC72 parallel an den Spaltenleitungen die zu den Teilnehmerstellen der einzelnen Gruppen führen, angeschaltet und in diesen Zwischenleitungen sind dann entsprechende Koppler seriell geschaltet, wie vorstehend für die verschiedenen Aufgaben beschrieben ist.

Wenn der Konferenzkoppler KK bzw. KK1 nur in den Zwischenleitungen für die Interverbindungen geschaltet ist, so bedeutet dies nicht, dass nicht auch in den Zwischenleitungen, die zu den Verbindungsleitungssätzen unterschiedlicher Art führen, auch bei entsprechenden Bedingungen derartige Koppler einfügbar sind. Das gleiche gilt für andere Koppler, die in Zwischenleitungen für Internverbindungen bzw. für Externverbindungen über Verbindungsleitungen unterschiedlicher Art unterschiedlich vorhanden sind.

Wie vorstehend erwähnt, sind mit den den Teilnehmergruppen zugeordneten Kopplern, beispielsweise K1 bis K7 der Teilnehmerstellen TLN00 bis TIn79 in den Spalten die Zwischenleitungsgruppen für die Anschaltung von Kopplern und Einrichtungen für den Internverkehr bzw. für den Externverkehr verbunden. Die in diesen Zwischenleitungen zwischengefügten Koppler ermöglichen je nach Aufgabe die Anschaltung von weiteren Kopplern, beispielsweise KCE, KA11 bis QS21 für die Anschaltung von zusätzlichen Einrichtungen und Informationen und für eine entsprechende Konzentration zwecks Einsparung von benötigten Koppelpunkten zur Anschaltung von Sondereinrichtungen und Sondersignalen wie beispielsweise Wähltönen und anderen Signalen.

Mit der vorstehend beschriebenen Grundkonzeption einer Fernsprechanlage, insbesondere Fernsprechnebenstellenanlage, mit einer zentralen, Zustände der Endstellen abtastenden Steuerung und mit Endstellen zugeordneten, zumindest eine Speisung der Endstellen enthaltenden Teilnehmerschaltungen ist die Sprechwegedurchschaltung bei der Verbindungsherstellung zwischen Teilnehmerstellen untereinander und zwischen Teilnehmerstellen und Sätzen, welche unterschiedlichen Verbindungsleitungen zugeordnet sind, sowie mit anderen für die Verbindungsherstellung notwendigen Einrichtungen und Sondereinrichtungen derart einfach zu gestalten, dass durch Hinzufügen der einzelnen Kopplereinheiten der jeweils kundengerechte Systemausbau festlegbar ist.

Durch die Verwendung unterschiedlicher Kopplerarten je nach Einsatz des Kopplers kann die Steuerung für die Koppler, die für bestimmte Funktionen verwendet werden, sehr vereinfacht sein. Ausserdem wird durch die Nach- bzw. Vorordnung von Sprechwegekoppelpunkten unterschiedlicher Koppler in den zu den teilnehmerindividuellen Sprechwegekoppelpunkten führenden Zwischenleitungen die Möglichkeit gegeben, den Ausbau einer Anlage in einfachster Weise ohne Änderung des Grundkonzeptes zu ermöglichen.

Dadurch, dass die Spalten der den Teilnehmerstellen zugeordneten Koppler zu unterschiedlichen Zwischenleitungsgruppen führen und beliebig zusätzliche Zwischenleitungsgruppen vorgesehen werden können, ist die Erweiterbarkeit um zusätzliche Verbindungsleitungen und zusätzliche Koppler für die Anschaltung der Verbindungsleitungen in einfacher Weise möglich. Dadurch, das in diesem Zwischenleitungsgruppen beliebig Koppler für unterschiedliche Funktionen einfügbar und auch zusammenfügbar sind, ist in einfacher Weise über diese Zwischenleitungen die Einfügung beliebiger Funktionen und die Anschaltung beliebiger Signale möglich und können auch beliebige Kopplergruppen zusammengefasst werden, so dass auch mit vorgegebenen Kopplern bestimmter Grösse eine maximale Ausnutzbarkeit der vorhandenen Koppelpunkte solcher Koppler möglich ist. Dadurch, dass den Kopplern in den der Teilnehmergruppe zugeordneten Zwischenleitungen in den Zeilen besondere Koppler nachschaltbar sind und diese nachgeschalteten Koppler auch unabhängig voneinander betätigbare Koppelpunkte enthalten, können die in den Zwischenleitungen geschalteten Koppler mehrfach ausgenutzt werden. Dies gilt beispielsweise für die Anschaltung der Codeempfänger und der während des Anschaltezustandes der Codeempfänger anzuschaltenden Wähltöne. Auch kann über einen zusätzlichen Koppler ohne Durchschaltung von Koppelpunkten ein Vermittlungsplatz angeschaltet werden, während über den zusätzlichen Koppler KT an den Vermittlungsplätzen dann die Wähltöne anschaltbar sind. Der zusätzliche Koppler KT ermöglicht sowohl die Anschaltung von unterschiedlichen Wähltönen an den Vermittlungsplätzen als auch die Anschaltung der unterschiedlichen Wähltöne über den zusätzlichen, den Codeempfängern zugeordneten Koppler KCE bzw. KCE' an den zu den Teilnehmerstellen bzw. zu den Verbindungsleitungen vorgesehenen Kopplern KCL bis KC22.

Dem Vorstehenden ist zu entnehmen, dass durch Einfügung von Kopplern unterschiedlicher Art in den mit den Zeilen der den Teilnehmergruppen zugeordneten Zwischenleitungen eine beliebige, kundengerechte Ausbaumöglichkeit des Systems gegeben ist, ohne dass an dem Grundkonzept des Systems und an den Funktionen der zentralen Steuerung eine Änderung vorzunehmen ist.

**Patentansprüche**

1. Schaltungsanordnung für eine Fernsprechanlage, insbesondere Fernsprechnebenstellenanlage, mit einer zentralen, die Zustände der Endstellen abtastenden Steuerung, mit den Endstellen zugeordneten, zumindest eine Speisung der Endstellen enthaltenden Teilnehmerschaltungen, sowie mit über entsprechende Sätze anschaltbaren, unterschiedlichen Verbindungsleitungen und unterschiedlichen Sondereinrichtungen, wobei die Betätigung von teilnehmerindividuellen Sprechwegekoppelpunkten und von für die Durchschaltung von teilnehmerindividuell anzulegenden Signalen, wie z.B. Tonsignalen vorgesehenen Koppelpunkte jeweils vermittels eines Kopplers einer ersten Art erfolgt, bei dem – bezogen auf jeweils eine bestimmte Koordinate – die Koppelpunkte unabhängig vom Betätigungszustand der jeweils zugehörigen anderen Koppelpunkte in Abhängigkeit von den Verbindungszuständen und von den Befehlen der zentralen Steuerung betätigbar sind, dadurch gekennzeichnet, dass durch die Betätigung von Koppelpunkten zusätzlicher Koppler (z.B. KP1, KP2, KCE) der genannten ersten Art weiterhin sowohl die teilnehmerindividuelle Anschaltung von in bestimmten Verbindungszuständen (KCE bei Wahlzustand) und/oder bei verschiedenen Verbindungsarten (z.B. KP1 bei internen, KP2 bei externen Verbindungen) anzulegenden unterschiedlichen Signalen als auch die teilnehmerindividuelle Zuschaltung von Verbindungssätzen (KON über KK, KP1 und K1) erfolgt und hierzu ein- und dieselbe Verbindung auch über mehr als einen Koppelpunkt (z.B. K1/1,2) einer Koordinate (z.B. Zeile) eines Kopplers oder mehrerer seriell geschalteter Koppler (z.B. KT, KP1, KP2) steuerbar ist und dass eine Betätigung von satzindividuellen, den teilnehmerindividuellen Sprechwegekoppelpunkten (K1/1, ZLAB7) je nach Verkehrsrichtung nach- bzw. vorgeordneten Sprechwegekoppelkontakten (z.B. KA12/1, KA22/1, KS/1) eines Kopplers (KA12 bzw. KA22 bzw. KS) zweiter Art zwecks Anschaltung unterschiedlicher Verbindungsleitungen (z.B. AL1) bzw. unterschiedlicher Sondereinrichtungen (z.B. PSE) erfolgt, wobei für diese Verbindungsdurchschaltung in den Kopplern (z.B. PA12, PS) der zweiten Art je Verbindung jeweils nur ein einziger Koppelpunkt einer Koordinate (z.B. Zeile) betätigt wird.

2. Schaltungsanordnung nach Anspruch 1, dadurch gekennzeichnet, dass die Endstellen (Tln00 bis Tln09 bzw. Tln70 bis Tln79) jeweils zu Gruppen mit jeweils einem der Gruppe zugeordneten Koppler (z.B. K1, K7) erster Art zusammengefasst sind und die Endstellen ein und derselben Gruppe über zwei einer Zeile zugeordneten Sprechwegekoppelpunkte (z.B. K1/1, K1/2) und die Endstellen unterschiedlicher Gruppen über je einen Koppelpunkt der jeweils zugeordneten beiden Koppler (K1, K7) und über zwischen diesen beiden Kopplern verlaufenden Zwischenleitungen (ZLC00 bis ZLC70) miteinander verbunden werden und parallel zu diesen Zwischenleitungen (ZLC00 bis ZLC70) die zu den unterschiedlichen Verbindungsleitungen durchschaltenden Koppler (z.B. KA12, KA22) zweiter Art führenden Zwischenleitungen (ZLC01 bis ZLC71) geschaltet sind.

3. Schaltungsanordnung nach einem der beiden vorangehenden Ansprüche, dadurch gekennzeichnet, dass die Zwischenleitungen für die Sprechwegedurchschaltung einadrig über elektronische Koppelpunkte geführt sind.

4. Schaltungsanordnung nach Anspruch 2, dadurch gekennzeichnet, dass die Zwischenleitungen (ZLC00 bis ZLC70) für den internen Sprechverkehr und die Zwischenleitungen (ZLC01 bis ZLC71) für den Sprechverkehr über Verbindungsleitungen unterschiedlicher Art (z.B. AL1, QL12) über für die Anschaltung von Signalen vorgesehenen Koppler (KP1, KP2) erster Art geführt sind.

5. Schaltungsanordnung nach Anspruch 2, dadurch gekennzeichnet, dass die Zwischenleitungen (ZLC00 bis ZLC70) für den internen Sprechverkehr und die Zwischenleitungen (ZLC01 bis ZLC71) für den Sprechverkehr über Verbindungsleitungen unterschiedlicher Art (AL1, QL12) über für die Anschaltung von Vermittlungsplätzen dienenden Leitungen führenden Koppler (KP1, KP2) erster Art geführt sind.

6. Schaltungsanordnung nach Anspruch 2, dadurch gekennzeichnet, dass die Zwischenleitungen (ZLC00 bis ZLC70) für internen Sprechverkehr über zu Konferenzsätzen führenden Koppler (KK) erster Art geführt sind.

7. Schaltungsanordnung nach Anspruch 2, dadurch gekennzeichnet, dass die Zwischenleitungen (ZLC00 bis ZLC70) für internen Sprechverkehr und die Zwischenleitungen (ZLC01 bis ZLC71) für Sprechverkehr über Verbindungsleitungen unterschiedlicher Art (AL1 bzw. QL12) über Codeempfänger anschaltende Koppler zweiter Art (KC11, KC12) geführt sind.

8. Schaltungsanordnung nach Anspruch 2, dadurch gekennzeichnet, dass die Zwischenleitungen (ZLC00 bis ZLC70) für internen Sprechverkehr über Personensucheinrichtungen anschaltende Koppler (KS) geführt sind.

9. Schaltungsanordnung nach Anspruch 2, dadurch gekennzeichnet, dass die Zwischenleitungen (ZLC00 bis ZLC70) für internen Sprechverkehr und die Zwischenleitungen (ZLC01 bis ZLC71) für Sprechverkehr über Verbindungsleitungen unterschiedlicher Art (z.B. AL1, QL1) über die Anschaltung von Durchschalteprüfungen veranlassende Koppler erster Art (KP1, KP2) geführt sind.

10. Schaltungsanordnung nach einem der Ansprüche 1 oder 2, dadurch gekennzeichnet, dass die Zwischenleitungen (ZLC01 bis ZLC71) für Sprechverkehr über Verbindungsleitungen unterschiedlicher Art über entsprechende Koppler zweiter Art die Durchschaltung zu den Verbindungsleitungen ermöglichen und an den den Verbindungsleitungen zugeordneten Zeilen über einen weiteren Koppler (KA11) Tonsignale (Dauerton, Hörton, Musik, Codesender) anschaltbar sind.

11. Schaltungsanordnung nach Anspruch 10, dadurch gekennzeichnet, dass über den letztgenannten Koppler (beispielsweise KA11) die Zuschaltung zur Konferenz möglich ist.

12. Schaltungsanordnung nach Anspruch 11, dadurch gekennzeichnet, dass die internen Endstellen über einen Koppler (KK) erster Art und die Verbindungsleitungen über einen Koppler (KA11) zweiter Art und eine entsprechende Konferenzschaltung (KON1) zusammenschaltbar sind.

13. Schaltungsanordnung nach einem der Ansprüche 1, 2, 4 oder 7, dadurch gekennzeichnet, dass ein Codeempfänger über einen Koppler (KC11) zweiter Art mit den internen Endstellen und über einen entsprechenden Koppler (KCE) erster Art zur Anschaltung von Tonsignalen mit einem weiteren Koppler (KT) erster Art, der zur Bestimmung des Tonrhythmus dient, verbindbar ist.

14. Schaltungsanordnung nach Ansprüchen 1, 4, 5 und 9, dadurch gekennzeichnet, dass jeweils ein Koppler für die Anschaltung der Signale, ein Koppler für die Anschaltung der Vermittlungsplätze und ein Koppler für die Anschaltung der Durchschalteprüfkriterien erster Art zu einem Koppler (KP1) für die Anschaltung an den internen Sprechwegen bzw. zu einem Koppler (KP2) für die Anschaltung an den Verbindungsleitungen unterschiedlicher Art zusammengefasst sind.

15. Schaltungsanordnung nach einem der vorangehenden Ansprüche, dadurch gekennzeichnet, dass eine Anlagenerweiterung dadurch erfolgt, dass zusätzliche Koppler (KC13, KC14, KA32 QS12) zweiter Art für die Anschaltung von Verbindungsleitungen (z.B. AL8, QL12) unterschiedlicher Art und zusätzliche Koppler (KP3, KP4) erster Art für die Anschaltung von Signalen parallel an den Zeilen (ZLAB00 bis ZLAB70) der Koppler (K1, K7) erster Art der Endstellengruppen anschaltbar sind.

16. Schaltungsanordnung nach einem der Ansprüche 5 oder 14, dadurch gekennzeichnet, dass die Vermittlungsplätze über Zwischenleitungen mit dem Koppler (KP1 bzw. KP2) erster Art für die Anschaltung an den zu den Endstellen bzw. Verbindungsleitungen unterschiedlicher Art führenden Koppler (K1 bzw. KA12) verbunden sind, welche über den Koppler (KT) erster Art für die Bestimmung des Tonrhythmus geführt sind.

17. Schaltungsanordnung nach Ansprüchen 10 und 12, dadurch gekennzeichnet, dass den die Endstellen zu Verbindungssätzen für Verbindungsleitungen durchschaltenden Kopplern (KA12 bis QS22) weitere Koppler (KA11 bis QS'21) zugeordnet sind, über die Tonsignale (Dauerton, Hörton, Musik, Codesender) und die Konferenzsätze zu den Verbindungsleitungen durchschaltbar sind.

18. Schaltungsanordnung nach Anspruch 8, dadurch gekennzeichnet, dass über die Zeilen des für die Anschaltung von Personensucheinrichtungen vorgesehenen Kopplers (KS) ein weiterer Koppler (MK) für die Anschaltung von Signalen unterschiedlicher Art bzw. für die Anschaltung einer Sonderübertragung (für die Anschaltung von Musik während des Wartezustandes) anschaltbar sind.

19. Schaltungsanordnung nach Anspruch 1, dadurch gekennzeichnet, dass die Endstellen an Spalten bzw. Zeilen von Kopplern (KA1, KA7) mit unabhängig voneinander betätigbaren Koppelpunkten und an die Zeilen bzw. die Spalten dieser Koppler (KA1, KA7) Zwischenleitungen anschaltbar sind, welche Koppler unterschiedliche Endstellengruppen verbinden und Verbindungen zu unterschiedliche Verbindungsleitungen durchschaltenden Kopplern herstellen und diese Zwischenleitungen (ZLC00 bis ZLC70, ZLC01 bis ZLC71) über einen entsprechenden Koppler (KS) bzw. ein den Amtsleitungen zugeordneter zusätzlicher Koppler (KA11) zu einem Signalanschaltekoppler (MK) zwecks Anschaltung von Sondersignalen, insbesondere ein Wartesignal (Musik während des Wartezustands), durchschaltbar sind.

20. Schaltungsanordnung nach Anspruch 19, dadurch gekennzeichnet, dass über den Signalanschaltekoppler (MK) eine Anschaltung eines Sondersatzes (Konferenzsatz KON0) an einer

Sondereinrichtung (beispielsweise für Personensuche PSE) steuerbar ist.

## Claims

1. A circuit arrangement for a telephone exchange, in particular a telephone PBX, with a central control unit which samples the states of the
end stations, with subscriber circuits which are
assigned to the end stations and which contain at
least one power supply for the end stations, and
with different types of connection lines which
can be connected via corresponding sets and
with different types of special devices, where the
actuation of subscriber-individual speech path
crosspoints and of crosspoints provided for
switching through signals, e.g. voice frequency
signals, to be connected in subscriber-individual
fashion, is in each case effected by means of a
coupler of a first type, where – in each case relative to a specific coordinate – the crosspoints can
be actuated irrespectively of the actuation state
of the respective associated other crosspoints in
dependence upon the connection states and the
commands of the central control unit, characterised in that the actuation of crosspoints of additional couplers (e.g. KP1, KP2, KCE) of the aforesaid first type, results both in the subscriber-individual connection of different signals, which are
to be connected in specific connection states
(KCE in the case of the dialling state) and/or in
the case of different connection modes (e.g. KP1
in the case of internal connections, KP2 in the
case of external connections), and also in the
subscriber-individual connection of connection
sets (KON via KK, KP1 and K1) and that for this
purpose one and the same connection can be
controlled via more than one crosspoint (e.g.
K1/1,2) of a coordinate (e.g. row) of a coupler or a
plurality of series connected couplers (e.g. KT,
KP1, KP2) and that set-individual speech path
coupling contacts (e.g. KA12/1, KA22/1, KS/1) of
a coupler (KA12, KA22, KS respectively) of the
second type, which coupling contacts follow or
precede the subscriber-individual speech path
crosspoints (K1/1, SLAB7) in accordance with the
traffic direction, are actuated in order to connect
different types of connection lines (AL1) and different types of special devices (e.g. PSE), where,
for each connection, only one single crosspoint
of a coordinate (e.g. row) is actuated for this connection switch-through in the couplers (PA12,
PS) of the second type.

2. A circuit arrangement as claimed in claim 1,
characterised in that the end stations (TIn00 to
TIn09 and TIn70 to TIn79) are each combined to
form groups with a coupler (e.g. K1, K7) of the
first type assigned to each of the groups, and at
the end stations of one and the same group are
connected to one another via two speech path
crosspoints (e.g. K1/1, K1/2) assigned to a row,
and the end stations of different groups are connected to one another via a crosspoint of the assigned two couplers (K1, K7) and via intermediate

lines (ZLC00 to ZLC70) which extend between
these two couplers, and that intermediate lines
(ZLC01 to ZLC71) which lead to the couplers (e.g.
KA12, KA22) which switch through the connection lines of different types, are connected in parallel to the intermediate lines (ZLC00 to ZLC70).

3. A circuit arrangement as claimed in one of
the two preceding claims, characterised in that
the intermediate lines for the speech path
switch-through extend in the form of one wire via
electronic crosspoints.

4. A circuit arrangement as claimed in claim 2,
characterised in that the intermediate lines
(ZLC00 to ZLC70) for the internal speech traffic
and the intermediate lines (ZLC01 to ZLC71) for
the speech traffic via connection lines of different types (e.g. AL1, QL12) lead via couplers (KP1,
KP2) of the first type provided for the connection
of signals.

5. A circuit arrangement as claimed in claim 2,
characterised in that the intermediate lines
(ZLC00 to ZLC70) for the internal speech traffic
and the intermediate lines (ZLC01 to ZLC71) for
the speech traffic via connection lines of different types (AL1, QL12) lead via couplers (KP1, KP2)
of the first type which lead to lines which serve to
connect switchboard positions.

6. A circuit arrangement as claimed in claim 2,
characterised in that the intermediate lines
(ZLC00 to ZLC70) for internal speech traffic lead
via couplers (ZK) of the first type which themselves lead to conference sets.

7. A circuit arrangement as claimed in claim 2,
characterised in that the intermediate lines
(ZLC00 to ZLC70) for internal speech traffic and
the intermediate lines (ZLC01 to ZLC71) for
speech traffic via connection lines of different
types (AL1 and QL12) lead via couplers of the second type (KC11, KC12) which serve to connect
code receivers.

8. A circuit arrangement as claimed in claim 2,
characterised in that the intermediate lines
(ZLC00 to ZLC70) for internal speech traffic lead
via couplers (KS) which serve to connect personnel locating devices.

9. A circuit arrangement as claimed in claim 2,
characterised in that the intermediate lines
(ZLC00 to ZLC70) for internal speech traffic and
the intermediate lines (ZLC01 to ZLC71) for
speech traffic via connection lines of different
types (e.g. AL1, QL1) lead via couplers of the first
type (KP1, KP2) which serve to connect switch-
through tests.

10. A circuit arrangement as claimed in one of
the claims 1 or 2, characterised in that the intermediate lines (ZLC01 to ZLC71) for speech traffic
via connection lines of different types enable
switch-through to the connection lines via corresponding couplers of the second type and that
voice frequency signals (continuous tone, call
progress tone, music, code transmitter) can be
connected via a further coupler (KA11) to the
rows assigned to the connection lines.

11. A circuit arrangement as claimed in claim
10, characterised in that a conference connection is facilitated via the last mentioned coupler (e.g. KA11).

12. A circuit arrangement as claimed in claim 11, characterised in that the internal end stations can be interconnected via a coupler (KK) of the first type and the connection lines can be interconnected via a coupler (KA11) of the second type and an appropriate conference circuit (KON1).

13. A circuit arrangement as claimed in one of the claims 1, 2, 4 or 7, characterised in that a code receiver can be connected via a coupler (KC11) of the second type to the internal end stations and can be connected via an appropriate coupler (KCE) of the first type for the connection of voice frequency signals to a further coupler (KT) of the first type which serves to determine the voice frequency rhythm.

14. A circuit arrangement as claimed in claims 1, 4, 5 and 9, characterised in that a coupler for the connection of the signals, a coupler for the connection of the switchboard positions, and a coupler for the connection of the switch-through test criteria, each of the first type, are combined to form a coupler (KP1) for connection to the internal speech paths and to form a coupler (KP2) for connection to the connection lines of different types.

15. A circuit arrangement as claimed in one of the preceding claims, characterised in that the exchange is extended in that additional couplers (KC13, KC14, KA32, QS12) of the second type for the connection of connection lines (e.g. AL8, QL12) of different types and additional couplers (KP3, KP4) of the first type for the connection of signals can be connected in parallel to the rows (ZLAB00 to ZLAB70) of the couplers (K1, K7) of the first type of the end station groups.

16. A circuit arrangement as claimed in one of the claims 5 or 14, characterised in that the switchboard positions are connected via intermediate lines to the coupler (KP1, KP2) of the first type for connection to the couplers (K, KA12) which lead to the end stations and to the connection lines of different types, and which lead via the coupler (KT) of the first type which serves to determine the voice frequency rhythm.

17. A circuit arrangement as claimed in claims 10 and 12, characterised in that the couplers (KA12 to QS22), which switch through the end stations to connection sets for connection lines, are assigned further couplers (KA11 to QS'21) via which voice frequency signals (continuous tone, call progress tone, music, code transmitter) and the conference sets can be switched through to the connection lines.

18. A circuit arrangement as claimed in claim 8, characterised in that via the rows of the coupler (KS), provided for the connection of personnel locating devices, further couplers (MK) can be connected for the connection of signals of different types and for the connection of a special transmission (for the connection of music during the waiting state).

19. A circuit arrangement as claimed in claim 1, characterised in that the end stations can be connected to columns and rows of couplers (KA1, KA7) having crosspoints which can be actuated independently of one another, and intermediate lines can be connected to the rows and columns of these couplers (KA1, KA7) where said couplers connect different end station groups and establish connections to couplers which switch through different connection lines and where said intermediate lines (ZLC00 to ZLC70, ZLC01 to ZLC71) can be switched through via an appropriate coupler (KS) and an additional coupler (KA11), assigned to the exchange lines, to a signal connection coupler (MK) for the connection of special signals, in particular a waiting signal (music during the waiting state).

20. A circuit arrangement as claimed in claim 19, characterised in that the connection of a special set (conference set KON0) to a special device (e.g. for personnel location PSE) can be controlled via the signal connecting coupler (MK).

**Revendications**

1. Montage pour une installatin de téléphonie, notamment un central téléphonique à postes supplémentaires, comportant un dispositif central de commande explorant les états des postes terminaux, des circuits d'abonnés associés aux postes terminaux et comportant au moins un système d'alimentation des postes terminaux, ainsi que différentes lignes de jonction pouvant être raccordées par l'intermédiaire de jeux d'organes de jonction correspondants, et différents dispositifs, et dans lequel l'actionnement de points de couplage de voies téléphoniques qui sont prévus individuellement par abonné, et de points de couplage prévus pour la transmission directe de signaux devant être appliqués individuellement pour chaque abonné, comme par exemple des signaux audibles, s'effectue respectivement au moyen d'un coupleur d'un premier type, et dans lequel – par rapport respectivement à une coordonnée déterminée – les points de couplage peuvent être actionnés indépendamment de l'état d'actionnement des autres points de couplage respectivement associés, en fonction des états de liaison et des instructions du dispositif central de commande, caractérisé par le fait qu'en outre aussi bien la transmission, prévue individuellement par abonné, de différents signaux devant être appliqués dans des états déterminés de liaison (KCE lors de l'état de sélection) et/ou dans le cas de différents types de liaisons (par exemple KP1 dans le cas de liaisons internes, KP2 dans le cas de liaisons externes), que le branchement supplémentaire, prévu individuellement par abonné, de jeux d'organes de jonction (KON par l'intermédiaire de KK, KP1 et K1) s'effectue au moyen de l'actionnement de points de couplage de coupleurs supplémentaires (par exemple KP1, KP2, KCE), et qu'à cet effet une même liaison peut être commandée également par l'intermédiaire de plus d'un point de couplage (par exemple K1/1,2) d'une coordonnée (par exemple une ligne) d'un coupleur ou par l'intermédiaire de plusieurs coupleurs (par exemple KT, KP1, KP2) branchés en série et qu'un actionnement de contacts de couplage de voies téléphoniques (par exemple KA12/1, KA22/1, KS/1) d'un coupleur (KA12 ou KA22 ou KS) d'un second type, qui sont prévus individuellement pour chaque jeu d'organes de jonction et sont montés, en fonction du sens du trafic, en aval ou en amont des points de couplage de voies téléphoniques (K1/1, ZLA87) prévus individuellement par abonné, est réalisé dans le but de raccorder différentes lignes de jonction (par exemple AL1) ou différents dispositifs particuliers (par exemple PSE), auquel cas respectivement seul un point de couplage unique d'une coordonnée (par exemple une ligne) est actionné, pour chaque liaison, pour cette transmission directe d'une liaison dans les coupleurs (par exemple PA12, PS) du second type.

2. Montage suivant la revendication 1, caractérisé par le fait que les postes terminaux (Tln00 à Tln09 ou Tln70 à Tln79) sont rassemblés respectivement en groupes comportant des coupleurs (par exemple K1, K7) d'une premier type, associés respectivement à l'un des groupes et que les postes terminaux d'un même groupe sont reliés entre eux par l'intermédiaire de deux points de couplage de voies téléphoniques (par exemple K1/1, K1/2) et les postes terminaux de groupes différents sont reliés entre eux par l'intermédiaire respectivement d'un point de couplage des deux coupleurs (K1, K7) respectivement associés et au moyen de lignes intermédiaires (ZLC00 à ZLC70) s'étendant entre ces deux coupleurs, et qu'en parallèle avec ces lignes intermédiaires (ZLC00 à ZLC70) se trouvent raccordées les lignes intermédiaires (ZLC01 à ZLC71) qui aboutissent aux coupleurs (par exemple KA12, KA22) d'un second type, interconnectant les différentes lignes de jonction.

3. Montage suivant l'une des revendications précédentes, caractérisé par le fait que les lignes intermédiaires pour l'interconnexion des voies téléphoniques sont raccordées, selon un mode à un conducteur, par l'intermédiaire de points de couplage électroniques.

4. Montage suivant la revendication 2, caractérisé par le fait que les lignes intermédiaires (ZLC00 à ZLC70) prévues pour le trafic téléphonique interne et les lignes intermédiaires (ZLC01 à ZLC71) prévues pour le trafic téléphonique réalisé par l'intermédiaire de lignes de jonction de type différent (par exemple AL1, AL12), passent par l'intermédiaire de coupleurs (KP1, KP2) d'un premier type prévus pour la transmission de signaux.

5. Montage suivant la revendication 2, caractérisé par le fait que les lignes intermédiaires (ZLC00 à ZLC70) prévues pour le trafic téléphonique interne et les lignes intermédiaires (ZLC01 à ZLC71) prévues pour le trafic téléphonique réalisé par l'intermédiaire de lignes de jonction de type différent (AL1, QL12) passent par l'intermédiaire de coupleurs (KP1, KP2) reliés à des lignes servant au raccordement de centraux.

6. Montage suivant la revendication 2, caractérisé par le fait que les lignes intermédiaires (ZLC00 à ZLC70) prévues pour le trafic téléphonique interne passent par des coupleurs (KK) d'un premier type reliés à des unités pour conférence.

7. Montage suivant la revendication 2, caractérisé par le fait que les lignes intermédiaires (ZLC00 à ZLC70) prévues pour le trafic téléphonique interne et les lignes intermédiaires (ZLC01 à ZLC71) prévues pour le trafic interne réalisé par l'intermédiaire de lignes de jonction de type différent (AL1 ou QL12) passent par l'intermédiaire de coupleurs (KC11, KC12) d'un second type raccordant des récepteurs de code.

8. Montage suivant la revendication 2, caractérisé par le fait que les lignes intermédiaires (ZLC00 à ZLC70) prévues pour le trafic téléphonique interne passent par l'intermédiaire de coupleurs (KS) raccordant des dispositifs de recherche de personnes.

9. Montage suivant la revendication 2, caractérisé par le fait que les lignes intermédiaires (ZLC00 à ZLC70) prévues pour le trafic téléphonique interne et les lignes intermédiaires (ZLC01 à ZLC71) prévues pour le trafic téléphonique réalisé par l'intermédiaire de lignes de jonction de type différent (par exemple AL1, QL1) passent par des coupleurs d'un premier type (KP1, KP2) déclenchant l'application de signaux de contrôle d'interconnexion.

10. Montage suivant l'une des revendications 1 ou 2, caractérisé par le fait que les lignes intermédiaires (ZLC01 à ZLC71) servant au trafic téléphonique réalisé par l'intermédiaire de lignes de jonction de type différent et de coupleurs correspondants d'un second type permettent l'interconnexion avec les lignes de jonction et des signaux audibles (son permanent, tonalité audible, musique, émetteur de code) peuvent être appliqués aux lignes associées aux lignes de jonction, par l'intermédiaire d'un autre coupleur (KA11).

11. Montage suivant la revendication 10, caractérisé par le fait que le raccordement supplémentaire pour une conférence est possible par l'intermédiaire du coupleur indiqué en premier lieu (par exemple KA11).

12. Montage suivant la revendication 11, caractérisé par le fait qu'on peut réaliser une interconnexion entre les postes terminaux internes passant par un coupleur (KK) d'un premier type et les lignes de jonction passant par un coupleur (KA11) d'un second type et un circuit de conférence correspondant (KON1).

13. Montage suivant l'une des revendications 1, 2, 4, ou 7, caractérisé par le fait qu'un récepteur de code peut être relié par l'intermédiaire d'un coupleur (KC11) d'un second type aux postes terminaux internes et, par l'intermédiaire d'un coupleur correspondant (KCE) d'un premier type, servant au raccordement de signaux audibles, à un autre coupleur (KT) du premier type, qui sert à déterminer le rythme sonore.

14. Montage suivant les revendications 1, 4, 5 et 9, caractérisé par le fait que respectivement un coupleut utilisé pour la transmission des signaux, un coupleur utilisé pour le raccordement des centraux et un coupleur utilisé pour la transmission des critères de contrôle d'interconnexion d'un premier type sont réunis pour former un coupleur (KP1) utilisé pour le raccordement des voies téléphoniques internes pour former un coupleur (KP2) utilisé pour le raccordement aux lignes de jonction d'un type différent.

15. Montage suivant l'une des revendications précédentes, caractérisé par le fait qu'une extension de l'installation est réalisée grâce au fait que les coupleurs supplémentaires (KC13, KC14, KA32, QS12) d'un second type, utilisés pour le raccordement de lignes de jonction (par exemple AL8, QL12) d'un type différent, et des coupleurs supplémentaires (KP3, KP4) du premier type utilisés pour le raccordement de signaux, peuvent être raccordés en parallèle aux lignes (ZLAB00 à ZLAB70) des coupleurs (K1, K7) du premier type des groupes de postes terminaux.

16. Montage suivant l'une des revendications 5 ou 14, caractérisé par le fait que les centraux sont reliés au moyen de lignes intermédiaires au coupleur (KP1 ou KP2) du premier type pour le raccordement aux coupleurs (K1 ou KA12) établissant la liaison avec les postes terminaux ou avec les lignes de jonction de type différent et qui sont raccordés par l'intermédiaire du coupleur (KT) du premier type pour la détermination du rythme sonore.

17. Montage suivant les revendications 10 et 12, caractérisé par le fait qu'aux coupleur (KA12 à QS22), qui interconnectent les postes des terminaux à des jeux d'organes de jonction pour des lignes de jonction, se trouvent associés d'autres coupleurs (KA11 à QS'21), au moyen desquels les signaux sonores (son permanent, tonalité audible, musique, émetteur de code) et les unités pour conférence peuvent être interconnectés aux lignes de jonction.

18. Montage suivant la revendication 8, caractérisé par le fait qu'un autre coupleur (MK) pour le raccordement de signaux de type différent ou pour le raccordement d'une transmission particulière (pour le branchement d'une musique pendant l'état d'attente) peut être raccordé par l'intermédiaire des lignes du coupleur (KS) prévues pour le raccordement de dispositifs de recherche de personnes.

19. Montage suivant la revendication 1, caractérisé par le fait que les postes terminaux peuvent être raccordés à des colonnes ou à des lignes de coupleurs (KA1, KA7) à l'aide de points de couplage pouvant être actionnés indépendamment les uns des autres, et qu'aux lignes et aux colonnes de ces coupleurs (KA1, KA7) peuvent être raccordées des lignes intermédiaires qui relient des coupleurs de groupes différents de postes terminaux et établissent des liaisons avec des coupleurs interconnectant différentes lignes de jonction, et que ces lignes intermédiaires (ZLC00 à ZLC70, ZLC01 à ZLC71) peuvent être interconnectées par l'intermédiaire d'un coupleur correspondant (KS) ou d'un coupleur supplémentaire (KA11), associé aux lignes de liaison au central, à un coupleur (MK) de branchement de signaux, en vue de réaliser le branchement de signaux particuliers, notamment le signal d'attente (musique pendant l'état d'attente).

20. Montage suivant la revendication 19, caractérisé par le fait qu'un raccordement d'une unité particulière (unité de conférences KON0) à un dispositif (par exemple pour un dispositif PSE de recherche de personnes) peut être commandé par l'intermédiaire du coupleur (MK) d'application de signaux.

0 106 198